# EUROPÄISCHE PATENTSCHRIFT

(11) **EP 2 847 048 B1**
(45) Veröffentlichungstag und Bekanntmachung des Hinweises auf die Patenterteilung: **05.10.2016**
(21) Anmeldenummer: 13722425.9
(22) Anmeldetag: 13.05.2013
(51) Int. Cl.: B60T 13/66, B60T 8/17, B60T 8/32, B60T 8/36

(54) **STEUERVENTILEINRICHTUNG FÜR EINE SCHIENENFAHRZEUGBREMSE**
CONTROL VALVE DEVICE FOR A RAIL VEHICLE BRAKE
DISPOSITIF À SOUPAPE DE COMMANDE POUR UN FREIN DE VÉHICULE FERROVIAIRE

(30) Priorität: 11.05.2012 DE 102012009427
(43) Veröffentlichungstag der Anmeldung: 18.03.2015
(73) Patentinhaber: KNORR-BREMSE Systeme für Schienenfahrzeuge GmbH, 80809 München (DE)
(72) Erfinder: RASEL, Thomas, 85635 Höhenkirchen-Siegertsbrunn (DE); HERDEN, Marc-Oliver, 81377 München (DE); VOLLMER, Achim, 82024 Taufkirchen (DE)
(86) Internationale Anmeldenummer: PCT/EP2013/059848
(87) Internationale Veröffentlichungsnummer: WO 2013/167759

(56) Entgegenhaltungen:
- EP-A1- 1 550 593
- US-A1- 2007 236 077
- US-A1- 2010 072 809

## Beschreibung

Die vorliegende Erfindung betrifft eine Steuerventileinrichtung für eine hochverfügbare pneumatische Bremsanlage für ein Schienenfahrzeug, eine pneumatische Bremsanlage für ein Schienenfahrzeug sowie ein Schienenfahrzeug.

Schienenfahrzeuge weisen häufig pneumatische Bremsanlagen auf, die einen Bremsdruck in eine Bremswirkung umzusetzen vermögen. Eine pneumatische Bremse übernimmt dabei in der Regel die Funktion einer Betriebsbremse, die eine gesteuerte oder geregelte Bremsung auszuführen vermag. Aus Sicherheitsgründen ist eine Bremse mit besonders hoher Verfügbarkeit vorgesehen, die auch beispielsweise bei Ausfall einer Stromversorgung eine Bremsung durchzuführen vermag. Häufig wird diese Bremse über die pneumatische Bremseinrichtung bereitgestellt, die dazu mit geeigneten pneumatischen Elementen zur Sicherstellung der hohen Verfügbarkeit ausgestattet wird und sich bestimmte Elemente wie Druckluftreservoirs, Leitungen und Bremseinrichtungen mit der Betriebsbremse teilen kann. Dabei sind Ansteuerung oder Auslösung der Bremse mit hoher Verfügbarkeit besonders robust und zuverlässig und auch bei Ausfall von Steuereinrichtungen und einer Elektronik funktionsfähig. Eine hochverfügbare Bremse ist in der Regel schon bei der Entwicklung dazu ausgelegt, auch bei betriebsbedingten Schwankungen von Bremseneigenschaften eine definierte Soll-Verzögerung bereitstellen zu können.

Ein derartiges Bremssystem ist aus der Veröffentlichung US 2010/0072809 A1 bekannt.

Eine Aufgabe der vorliegenden Erfindung besteht darin, eine Vordrucksteuerventileinrichtung für eine hochverfügbare Bremseinrichtung zu verbessern.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Im Rahmen dieser Beschreibung kann ein Schienenfahrzeug ein oder mehrere Wagen mit oder ohne eigenen Antrieb und/oder ein Zugfahrzeug in beliebiger Kombination bezeichnen. Insbesondere kann ein Schienenfahrzeug Triebwagen aufweisen. Allgemein können zwei pneumatische Komponenten wie etwa Leitungen und Ventileinrichtung als miteinander verbunden angesehen werden, wenn ein Fluid, insbesondere Druckluft, zwischen ihnen zu strömen vermag. Zwei pneumatische Komponenten können als miteinander verbindbar angesehen werden, wenn durch geeignete Schaltung und/oder Stellung einer oder mehrerer pneumatischer Komponenten ein Zustand erreicht werden kann, in dem die Komponenten miteinander verbunden sind. Ferner können elektrische oder elektronische oder elektropneumatische Komponenten als miteinander verbunden oder verbindbar angesehen werden, wenn ein elektrischer Strom zwischen ihnen fließen kann oder Komponenten derart geschaltet werden können, dass ein elektrischer Strom zwischen ihnen fließen kann. Eine Bremsanlage kann eine oder mehrere Bremseinrichtungen aufweisen, die auf einen oder mehrere Wagen verteilt sein können. Eine Bremseinrichtung kann dazu vorgesehen sein, einen Bremsdruck durch Reibung in eine Bremswirkung umzusetzen, die durch eine geeignete Reibbremseinrichtung erzeugt werden kann. Eine solche Reibbremseinrichtung kann durch den Bremsdruck derart betätigt werden, dass sie gegen eine rotierende Komponente wie ein Rad oder eine Bremsscheibe gepresst wird, um eine Bremswirkung zu erzeugen. Eine Bremseinrichtung kann insbesondere eine Klotzbremse oder Scheibenbremse oder kombinierte Klotz/Scheibenbremse sein. Es kann eine Steuerleitung vorgesehen sein, die sich fahrzeugweit erstrecken kann. Eine Steuerleitung kann dazu ausgebildet sein, ein Signal zu übertragen, insbesondere ein Auslösesignal zur Auslösung einer Bremsung. Die Steuerleitung kann eine elektrische oder pneumatische Leitung sein. Entsprechend kann das Auslösesignal ein elektrisches oder pneumatisches Signal sein. Ein Signal kann beispielsweise durch eine Spannungsänderung gegeben sein, etwa einen Spannungsabfall oder eine Spannungserhöhung, oder durch eine Druckänderung, etwa einen Druckabfall oder eine Druckerhöhung. Ein Signal kann pulsweitenmoduliert sein. Es ist auch vorstellbar, dass über eine Steuerleitung mehrere Signale gleichzeitig übertragen werden, etwa indem diese auf einer elektrischen Leitung überlagert oder addiert werden. Eine pneumatische Bremsanlage kann dazu ausgebildet sein, basierend auf einem durch eine Steuerleitung übertragenem Signal, etwa einem Auslösesignal oder einem Bremssignal, einen Vorsteuerdruck bereitzustellen. Der Vorsteuerdruck kann aus einem geeigneten Vorsteuerdruckreservoir und gegebenenfalls über geeignete Ventileinrichtungen und pneumatische oder elektropneumatische Komponenten bereitgestellt sein. Die Bremsanlage kann dazu ausgebildet sein, den Vorsteuerdruck zu einer Relaisventileinrichtung zu leiten. Eine Relaisventileinrichtung kann dazu ausgebildet sein, einen Vorsteuerdruck in einen Bremsdruck umzusetzen, welcher einer oder mehreren Bremseinrichtungen zur Betätigung zuführbar sein kann. Insbesondere kann die Relaisventileinrichtung dazu ausgebildet sein, einen Vorsteuerdruck auf ein größeres Luftvolumen umzusetzen und/oder den Bremsdruck in Abhängigkeit von dem Vorsteuerdruck einzustellen. Somit kann durch Bereitstellen und/oder Steuerung des Vorsteuerdrucks mit verhältnismäßig kleinen pneumatischen oder elektropneumatischen Komponenten ein gewünschter Bremsdruck erzeugt werden. Die Relaisventileinrichtung kann mit einem Druckluftreservoir verbunden oder verbindbar sein, um den Vorsteuerdruck umzusetzen. Eine pneumatische Bremsanlage kann eine Betriebsbremsfunktionalität aufweisen und als Betriebsbremse dienen, die unter Umständen mit zusätzlichen Bremsanlagen wie etwa Magnetschienenbremsen und/oder dynamischen Bremsen zur gesteuerten Bremsung eines Schienenfahrzeugs eingesetzt werden kann. Dazu kann eine durch eine Steuereinrichtung steuerbare Hauptbremsventileinrichtung vorgesehen sein, die es vermag, während der Bremsung einen Vorsteuerdruck zu steuern und/oder zu regeln. Aufgrund der vielfältigen Komponenten insbesondere für die Steuerung kann eine Betriebsbremse recht empfindlich gegenüber einem Ausfall von Komponenten sein. Aus Sicherheitsgründen kann eine pneumatische Bremsanlage eine Hochverfügbarkeitsfunktionalität aufweisen und eine hochverfügbare Bremsanlage sein. Eine hochverfügbare Bremsanlage kann dazu ausgebildet sein, bei Auslösung garantiert eine definierte Bremswirkung und/oder einen definierten Bremsdruck zu erzeugen. Eine durch eine hochverfügbare Bremsanlage oder durch eine Hochverfügbarkeitsfunktionalität durchgeführte Bremsung kann eine Notbremsung oder eine Schnellbremsung sein und/oder allgemein als Sicherheitsbremsung bezeichnet werden. Der definierte Bremsdruck und/oder die definierte Bremswirkung kann bei Auslösung anhand einer Kennlinie festgelegt werden und beispielsweise von Parametern wie der Masse des Schienenfahrzeugs und einer Geschwindigkeit bei Auslösung der Bremsung abhängen. Eine hochverfügbare Bremsanlage kann dazu ausgebildet sein, den definierten Bremsdruck und/oder die definierte Bremswirkung auch unabhängig von oder bei Ausfall anderer Bremsanlagen des Schienenfahrzeugs und/oder bei Ausfall einer Spannungsversorgung oder einer Hauptbremsventileinrichtung bereitzustellen. Der für eine Hochverfügbarkeitsfunktionalität definierte Bremsdruck und/oder die definierte Bremswirkung kann während der Fahrzeugentwicklung festgelegt werden, um für die Bremsung eine gewünschte mittlere Fahrzeugverzögerung zu erreichen. Insbesondere kann vorgesehen sein, dass für eine Sicherheitsbremsung eine Soll-Verzögerung definiert ist, die durch den definierten Bremsdruck und/oder die definierte Bremswirkung zu erreichen ist. Bei einer Sicherheitsbremsung kann vorgesehen sein, dass die Soll-Verzögerung nicht gesteuert ist und/oder keiner zeitlichen Veränderung unterliegt. Die Bremsanlage kann dazu ausgebildet sein, einen bestimmten Vorsteuerdruck bereitzustellen, um den definierten Bremsdruck und/oder die Soll-Verzögerung zu erreichen. Eine Ansteuerungseinrichtung kann zur Auslösung einer Sicherheitsbremsung vorgesehen sein. Die Ansteuerungseinrichtung kann durch einen Fahrer manuell auslösbar sein und beispielsweise als Hebel oder Knopf ausgebildet sein. Es ist vorstellbar, dass die Ansteuerungseinrichtung eine Stellung für eine Auslösung der Bremsung aufweist und eine Stellung, in welcher die Bremsung nicht ausgelöst ist und/oder unterbrochen wird. Insbesondere kann vorgesehen sein, dass die Ansteuerungseinrichtung keine Zwischenstellungen zur Steuerung der Bremswirkung aufweist. Es ist vorstellbar, dass die Ansteuerungseinrichtung über eine Steuerleitung mit einer Steuereinrichtung und/oder einer Auslöseventileinrichtung verbunden oder verbindbar ist. Allgemein kann eine hochverfügbare pneumatische Bremsanlage eine Auslöseventileinrichtung aufweisen, die dazu ausgebildet sein kann, über eine Steuerleitung nach Maßgabe einer Ansteuerungseinrichtung eine Bremsung auszulösen. Es kann vorgesehen sein, dass die hochverfügbare Bremsanlage bei einer signifikanten Störung der Bremsanlage automatisch eine Bremsung auslöst, etwa wenn eine Hauptluftleitung unterbrochen ist. Die Auslöseventileinrichtung kann einen Eingang und einen Ausgang aufweisen. Über den Eingang kann die Auslöseventileinrichtung mit einem Druckluftreservoir verbunden oder verbindbar sein. Der Ausgang kann zur Bereitstellung eines Vorsteuerdrucks über eine Vorsteuerdruckleitung und gegebenenfalls weitere Ventileinrichtungen mit einer Relaisventileinrichtung verbunden oder verbindbar sein. Insbesondere kann vorgesehen sein, dass der Auslöseventileinrichtung ein Druckbegrenzungsventil vor- oder nachgeschaltet ist. Ein solches Druckbegrenzungsventil kann auch in die Auslöseventileinrichtung integriert sein. Die Auslöseventileinrichtung kann über eine Steuerleitung elektrisch oder pneumatisch ansteuerbar sein, etwa durch eine Ansteuerungseinrichtung. Die Auslöseventileinrichtung kann einen Entlüftungsausgang aufweisen. Die Auslöseventileinrichtung kann allgemein ein 3/2-Wegeventil aufweisen. Es ist vorstellbar, dass die Auslöseventileinrichtung in einer ersten Schaltstellung den Eingang mit dem Entlüftungsausgang verbindet und den Ausgang absperrt und in einer zweiten Schaltstellung den Eingang mit dem Ausgang verbindet und den Entlüftungsausgang absperrt. Eine Strömungsrichtung der Bremsanlage kann allgemein von einem Druckreservoir über eine Auslöseventileinrichtung zu einer Relaisventileinrichtung verlaufend definiert sein. Entsprechend kann eine Relaisventileinrichtung stromabwärts einer Auslöseventileinrichtung angeordnet sein.

Die Erfindung betrifft eine Steuerventileinrichtung für eine hochverfügbare pneumatische Bremsanlage für ein Schienenfahrzeug, mit einem Drucklufteingang, welcher mit einem Ausgang einer Auslöseventileinrichtung verbunden oder verbindbar ist, und über den der Steuerventileinrichtung ein definierter Eingangsdruck zuführbar ist, sowie einem Druckluftausgang, welcher mit einer Relaisventileinrichtung verbunden oder verbindbar ist, und über den der Relaisventileinrichtung ein Ausgangsdruck zuführbar ist. Die Steuerventileinrichtung weist ferner einen Sicherheitseingang auf, welcher mit einer Druckluftquelle verbunden oder verbindbar ist; wobei die Steuerventileinrichtung in einer ersten Schaltstellung den Sicherheitseingang mit dem Druckluftausgang fluidisch verbindet und in einer zweiten Schaltstellung den Drucklufteingang mit dem Druckluftausgang fluidisch verbindet. Die Steuerventileinrichtung ist dazu ausgebildet, in der zweiten Schaltstellung nach Maßgabe einer Steuereinrichtung den Eingangsdruck zu modifizieren, um den Ausgangsdruck bereitzustellen. Die Steuerventileinrichtung kann somit zwischen der Relaisventileinrichtung und der Auslöseventileinrichtung angeordnet sein und einen von der Auslöseventileinrichtung bereitgestellten Eingangsdruck modifizieren. Der Ausgangsdruck kann der Relaisventileinrichtung als Vorsteuerdruck zugeführt werden. Somit ist eine gesteuerte Sicherheitsbremsung möglich. Insbesondere ist es möglich, während des Betriebs eines Schienenfahrzeugs entstehende Schwankungen der Bremsleistung einzelner Bremseinrichtungen auszugleichen. Derartige Schwankungen können beispielsweise durch Bremsbelagabrieb, veränderliche Raddurchmesser oder Veränderungen bei den Wirkungsgraden von Bremskrafterzeugern der Bremseinrichtungen auftreten. Da derartige Schwankungen im Betrieb ausgeglichen werden können, ist die Entwicklung und Zulassungen von Bremsanlagen und Schienenfahrzeugen erleichtert. Die Steuerventileinrichtung kann ein oder mehrere Ventile aufweisen. Die Ventile der Steuerventileinrichtung können separat voneinander elektrisch oder pneumatisch ansteuerbar sein, etwa durch eine geeignete Steuereinrichtung, die eine elektronische Steuereinrichtung sein kann. Insbesondere kann die Steuerventileinrichtung ein elektrisch oder pneumatisch ansteuerbares Anpassungsventil aufweisen. Ein Anpassungsventil kann einen Eingang und einen Ausgang aufweisen. Der Eingang kann als Drucklufteingang der Steuerventileinrichtung dienen. Es ist vorstellbar, dass ein Anpassungsventil dazu ausgebildet ist, einen an seinem Eingang anliegenden Druck, welcher der Eingangsdruck der Steuerventileinrichtung sein kann, anzupassen und den angepassten Druck über seinen Ausgang weiterzuleiten. Insbesondere kann ein Anpassungsventil einen elektrisch oder pneumatisch ansteuerbaren Entlüftungsausgang aufweisen, über welchen ein am Eingang anliegender Druck verringert werden kann. Ein Anpassungsventil kann als 3/2-Wegeventil ausgebildet sein, etwa als ein Magnetventil. In der ersten Schaltstellung der Steuerventileinrichtung kann das Anpassungsventil in einer Entlüftungsstellung derart geschaltet sein, dass es seinen Eingang mit seinem Entlüftungsausgang verbindet und seinen Ausgang absperrt. In der zweiten Schaltstellung der Steuerventileinrichtung kann das Anpassungsventil in einer Durchlassstellung derart geschaltet sein, dass es seinen Eingang mit seinem Ausgang verbindet und/oder wechselnd zwischen Durchgangsstellung und Entlüftungsstellung geschaltet wird, um einen verringerten Druck weiterzuleiten. Dem Anpassungsventil kann ein Sicherungsventil nachgeschaltet sein, so dass ein Eingang des Sicherungsventils mit dem Ausgang des Anpassungsventil verbunden oder verbindbar ist. Das Sicherungsventil kann einen Ausgang aufweisen, der in einer Durchlassstellung des Sicherungsventils mit dem Eingang des Sicherungsventils verbunden ist. Ferner kann das Sicherungsventil einen Sicherheitseingang aufweisen, welcher in einer Durchlassstellung des Sicherungsventils abgesperrt sein kann. Der Sicherheitseingang eines Sicherungsventils kann mit einer Druckquelle verbunden oder verbindbar sein und somit als Sicherheitseingang der Steuerventileinrichtung angesehen werden. Ein Sicherungsventil kann als 3/2-Wegeventil ausgebildet sein, insbesondere als Magnetventil. In einer Sicherungsstellung des Sicherungsventils kann sein Ausgang mit dem Sicherheitseingang verbunden sein, während sein Eingang abgesperrt ist. Das Sicherungsventil kann derart ausgebildet sein, dass es ohne externe Ansteuerung die Sicherungsstellung einnimmt, etwa durch eine geeignete Vorspannung durch eine Feder. Es ist vorstellbar, dass der Ausgang eines Sicherungsventils als Druckluftausgang der Steuerventileinrichtung wirkt. In der ersten Schaltstellung der Steuerventileinrichtung kann ein Sicherungsventil in der Sicherungsstellung geschaltet sein. Es ist vorstellbar, dass in der zweiten Schaltstellung der Steuerventileinrichtung das Sicherungsventil in die Durchlassstellung geschaltet ist, etwa durch eine geeignete Ansteuerung. Anpassungsventil und Sicherungsventil können, falls vorhanden, zu einer Baueinheit zusammengefasst oder separat voneinander ausgebildet sein. Die Steuerventileinrichtung kann mit einer Drucksteuereinrichtung verbunden oder verbindbar sein, die eine elektronische Steuereinrichtung sein kann. Die Steuerventileinrichtung kann die Drucksteuereinrichtung umfassen. Die Drucksteuereinrichtung kann dazu ausgebildet sein, die Steuerventileinrichtung anzusteuern, insbesondere ein Anpassungsventil und/oder ein Sicherungsventil. Die Steuerventileinrichtung kann einen oder mehrere Drucksensoren aufweisen und/oder mit solchen Sensoren verbunden oder verbindbar sein. Eine Drucksteuereinrichtung kann dazu ausgebildet sein, Signale von dem oder den Sensoren zu empfangen und die Steuerventileinrichtung basierend auf solchen Signalen anzusteuern. Ein Drucksensor kann beispielsweise derart angeordnet sein, dass er einen Ausgangsdruck der Steuerventileinrichtung zu erfassen vermag, etwa stromabwärts des Druckluftausgangs und/oder zwischen einem Anpassungsventil und einem Sicherungsventil. Die Drucksteuereinrichtung kann über eine Steuerleitung mit einer Ansteuerungseinrichtung der Bremsanlage verbunden oder verbindbar sein, um ein Auslösesignal zu empfangen. Alternativ oder zusätzlich kann die Drucksteuereinrichtung über eine Anpassungssteuerleitung mit einer Anpassungsteuereinrichtung verbunden oder verbindbar sein, welche eine elektronische Steuereinrichtung sein kann. Eine Anpassungssteuereinrichtung kann dazu ausgebildet sein, während einer Sicherheitsbremsung eine Ist-Verzögerung des Schienenfahrzeugs zu erfassen und mit einer Soll-Verzögerung zu vergleichen. Dazu kann die Anpassungssteuereinrichtung beispielsweise mit geeigneten Sensoren, etwa Geschwindigkeitssensoren und/oder Trägheitssensoren und/oder Beschleunigungssensoren, und/oder der Ansteuerungseinrichtung verbunden oder verbindbar sein. Die Anpassungssteuereinrichtung kann dazu ausgebildet sein, ein Anpassungssignal über die Anpassungssteuerleitung bereitzustellen. Die Drucksteuereinrichtung kann dazu ausgebildet sein, die Steuerventileinrichtung basierend auf dem Anpassungssignal anzusteuern, um etwa den Ausgangsdruck zu erhöhen, wenn die Ist-Verzögerung geringer ist als die Soll-Verzögerung. Somit lässt sich auf einfache Art eine Steuerung der Sicherheitsbremsung erreichen, um Verschleißerscheinungen und Schwankungen bei der Bremsanlage auszugleichen. Die Steuerventileinrichtung kann leicht an bestehende Systeme nachgerüstet werden. Es ist vorstellbar, dass die Steuerventileinrichtung modulartig und/oder als Baueinheit ausgebildet ist. Die Drucksteuereinrichtung kann mit einem Überwachungsmodul verbunden oder verbindbar sein, welches als Teil der Drucksteuereinrichtung oder separat davon ausgebildet sein kann. Das Überwachungsmodul kann dazu ausgebildet sein, Fehler bei der Anpassung des Ausgangsdrucks zu erfassen, etwa weil ein unzureichender Druck auftritt. Dazu kann das Überwachungsmodul mit einem oder mehreren Drucksensoren verbunden sein, etwa den bereits erwähnten Drucksensoren. Es ist auch vorstellbar, dass das Überwachungsmodul mit anderen Drucksensoren verbunden ist, um eine Redundanz bei der Drucküberwachung zu erlauben. Das Überwachungsmodul kann dazu ausgebildet sein, die Steuerventileinrichtung anzusteuern, und insbesondere die Steuerventileinrichtung nur von der ersten Schaltstellung in die zweite Schaltstellung schalten zu lassen, wenn kein Fehler vorliegt. Das Überwachungsmodul kann mit der Anpassungssteuerleitung und/oder der Steuerleitung verbunden oder verbindbar sein. Insbesondere kann das Überwachungsmodul dazu ausgebildet sein, ein Sicherungsventil anzusteuern und zwischen der Durchlassstellung und der Sicherungsstellung zu schalten. Somit kann die Betriebssicherheit der Bremsanlage erhöht werden. Die Druckquelle kann einen definierten maximal zulässigen Vorsteuerdruck bereitstellen, der in der ersten Schaltstellung der Steuerventileinrichtung als Ausgangsdruck und somit als wirksamen Vorsteuerdruck bereitstellbar ist. In der zweiten Schaltstellung der Steuerventileinrichtung kann der Vorsteuerdruck angepasst, insbesondere abgesenkt werden. Bei einer Sicherheitsbremsung mit funktionsfähiger Steuerventileinrichtung kann somit der Vorsteuerdruck gesteuert werden, wobei der Vorsteuerdruck unterhalb des maximalen Vorsteuerdrucks liegt. Fällt die Steuerventileinrichtung aus, wird der maximale Vorsteuerdruck wirksam. Der maximale Vorsteuerdruck kann größer sein als ein normalerweise für eine Sicherheitsbremsung bereitgestellter Vorsteuerdruck, um eine Erhöhung der Bremswirkung zu erlauben.

Der Sicherungsventileingang kann über eine Umgehungsleitung fluidisch mit dem Ausgang der Auslöseventileinrichtung verbunden oder verbindbar sein Somit dient der Ausgang der Auslöseventileinrichtung als Druckluftquelle. Der maximale Vorsteuerdruck lässt sich auf diese Weise leicht über die Auslöseventileinrichtung und/oder das damit verbundene Druckluftreservoir festlegen.

Es kann vorgesehen sein, dass die Steuerventileinrichtung einen Entlüftungsausgang aufweist, über welchen der Eingangsdruck verringerbar ist, um den Ausgangsdruck zu erhalten. Der Entlüftungsausgang kann durch einen Entlüftungsausgang eines Anpassungsventil bereitgestellt sein.

Die Steuerventileinrichtung kann dazu ausgebildet sein, ohne Ansteuerung die erste Schaltstellung einzunehmen. Insbesondere kann vorgesehen sein, dass ein Sicherungsventil derart vorgespannt ist, dass es ohne gegenteilige Ansteuerung in die Sicherungsstellung übergeht. Ein Anpassungsventil kann dazu ausgebildet sein, in der ersten Schaltstellung der Steuerventileinrichtung in die Entlüftungsstellung überzugehen. Es können entsprechende Federeinrichtungen zum Bereitstellen einer Vorspannung vorgesehen sein.

Die Auslöseventileinrichtung kann ein Notbremsventil, ein Schnellbremsventil oder ein Bremssteuerventil einer Betriebsbremse umfassen. Somit können schon vorhandene Ventile verwendet werden, was insbesondere ein Nachrüsten der Steuerventileinrichtung erleichtert.

Es ist vorstellbar, dass die Steuerventileinrichtung dazu ausgebildet ist, den Eingangsdruck basierend auf einem über eine Anpassungssteuerleitung übertragenen Anpassungssignal zu modifizieren. Das Anpassungssignal kann basierend auf einem Vergleich der Ist-Verzögerung mit einer Soll-Verzögerung erstellbar sein. Ferner kann die Steuerventileinrichtung eine Steuereinrichtung aufweisen, die dazu ausgebildet, von zumindest einem weiteren Sensor des Schienenfahrzeugs oder zumindest einer weiteren Steuereinrichtung des Schienenfahrzeugs Daten zu empfangen, aus denen eine tatsächliche Bremswirkung, insbesondere die tatsächlich erfolgende und erfolgte Verzögerung des Schienenfahrzeugs hervorgeht, wobei die Steuereinrichtung ausgebildet ist, um das Anpassungssignal auf der Basis der von dem zumindest einem weiteren Sensor des Schienenfahrzeugs oder zumindest einer weiteren Steuereinrichtung des Schienenfahrzeugs empfangenen Daten zu ermitteln. Hierdurch lässt sich die Zuspannkraft der sicheren Bremse innerhalb eines eingeschränkten Bereiches modifizieren. Dadurch kann das Bremssystem an die Parameterschwankungen des Bremssystems angepasst werden. Die Anpassung erfolgt beispielsweise durch ein zugehöriges zugweites Modifikationssignal und wird auf Wagenebene durch einen zugehörigen Watchdog als Steuereinheit überwacht. Der Fail-Safe-Zustand kann damit die maximal notwendige Zuspannkraft und damit der maximale Bremsdruck sein. Besonders vorteilhaft ist dieses Ausführungsbeispiel, das die Zulassung der Fahrzeuge vereinfacht wird. Auch können innerhalb des möglichen Anpassbereichs verschiedene Beläge, zumindest zugweit, verwendet werden. Auch kann das Einleiten des Zustands der sicheren Bremse beispielsweise wie bislang erfolgen. Die Anpassung des Bremssystems erfolgt beispielsweise durch eine zusätzliche zugweite Leitung (als Modifikation der sicheren Bremse) sowie eine zugehörige Überwachungseinrichtung.

Die Steuerventileinrichtung kann eine Druckbegrenzungsfunktion aufweisen, vorzugsweise eine steuerbare Druckbegrenzungsfunktion. Die Druckbegrenzungsfunktion kann beispielsweise durch eine geeignete Ansteuerung eines Anpassungsventils durch eine Drucksteuereinrichtung bereitgestellt sein. Somit kann ein zusätzliches Druckbegrenzungsventil entfallen, dass üblicherweise einer Auslöseventileinrichtung nachgeschaltet ist.

Bei einer Weiterbildung kann die Steuerventileinrichtung ein Überwachungsmodul aufweisen, welches es vermag, die Steuerventileinrichtung zwischen der ersten und der zweiten Schaltstellung zu schalten. Das Überwachungsmodul erhöht die Sicherheit im Betrieb. Insbesondere kann das Überwachungsmodul dazu ausgebildet sein, einen Fail-Safe-Zustand bereitzustellen, in welchem ein maximaler Vorsteuerdruck vorliegt.

Die Erfindung betrifft außerdem eine pneumatische Bremsanlage für ein Schienenfahrzeug, die eine Hochverfügbarkeitsfunktion aufweist und eine hierin beschriebene Steuerventileinrichtung umfasst. Die Bremsanlage kann eine hierin beschriebene Anpassungssteuereinrichtung und/oder eine oder mehrere Steuerleitungen und/oder ein oder mehrere Druckluftreservoirs und/oder eine Ansteuerungseinrichtung und/oder eine oder mehrere Bremseinrichtungen und/oder eine oder mehrere Relaisventileinrichtungen und/oder eine oder mehrere Auslöseventileinrichtungen aufweisen. Die Bremsanlage kann eine Betriebsbremsfunktionalität aufweisen. Es können getrennte Vorsteuerdruckleitungen für die Betriebsbremsfunktionalität und die Hochverfügbarkeitsfunktionalität vorgesehen sein. Es ist vorstellbar, dass hierin beschrieben Steuerventileinrichtungen wagenweise vorgesehen sind.

Ferner betrifft die Erfindung ein Schienenfahrzeug mit einer hierin beschriebenen Steuerventileinrichtung und/oder einer hierin beschriebenen pneumatischen Bremsanlage.

Die Erfindung wird nun mit Bezug auf die begleitende Zeichnung anhand einer bevorzugten Ausführungsform beispielhaft erläutert

Es zeigt:

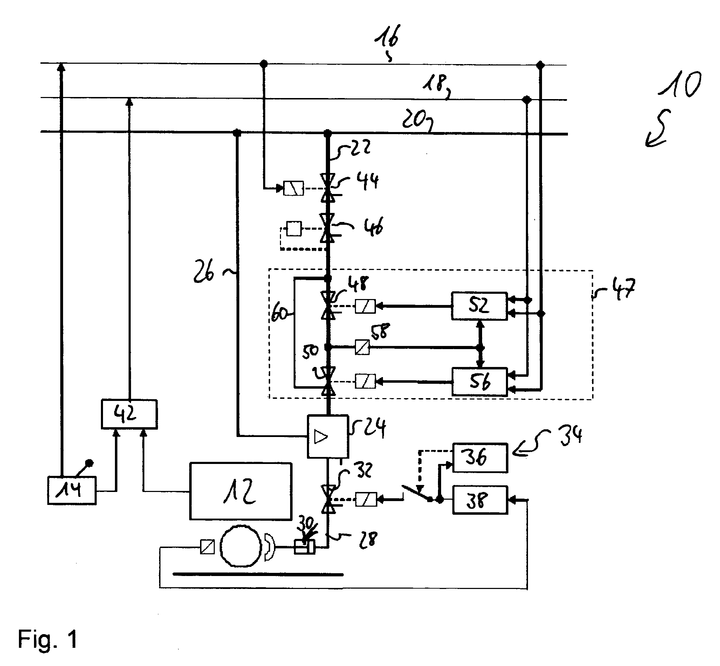

- Figur 1: schematisch ein Beispiel für eine pneumatische Bremsanlage eines Schienenfahrzeugs.

Figur 1 zeigt ein Beispiel für eine schematisch dargestellte pneumatische Bremsanlage 10 eines Schienenfahrzeugs, das symbolisch durch einen Wagen 12 dargestellt ist. Die Bremsanlage 10 weist eine Ansteuerungseinrichtung 14 auf, die in diesem Beispiel als ein Bremshebel dargestellt ist. Die Ansteuerungseinrichtung 14 ist mit einer Steuerleitung 16 verbunden. Wird die Ansteuerungseinrichtung 14 durch einen Benutzer, beispielsweise einen Fahrer des Schienenfahrzeugs, betätigt, wird über die Steuerleitung 16 ein Auslösesignal übertragen. In dem in Figur 1 gezeigten Beispiel ist die Steuerleitung 16 eine elektrische Leitung. Es ist auch vorstellbar, dass die Steuerleitung eine fluidische Leitung ist, etwa eine pneumatische Leitung. Insbesondere kann die Steuerleitung 16 eine Hauptluftleitung einer indirekten Bremsanlage eines Schienenfahrzeugs sein. Es ist ferner eine Anpassungssteuerleitung 18 vorgesehen, die in diesem Beispiel ebenfalls als elektrische Leitung ausgebildet ist. Es ist auch vorstellbar, dass die Anpassungssteuerleitung 18 eine Druckleitung ist, etwa eine pneumatisch Leitung. Die Bremsanlage 10 weist ferner ein oder mehrere Druckreservoirs 20 auf. Das Druckreservoir 20 kann insbesondere einen oder mehrere Behälter aufweisen, in denen ein Druckvorrat bei einem maximalen Vorsteuerdruck Cv1max für die Auslösung einer Hochverfügbarkeitsfunktion der Bremsanlage gespeichert ist. Es ist eine Vorsteuerdruckleitung 22 vorgesehen, über die ein Relaisventil 24 fluidleitend mit dem Druckluftreservoir 20 verbindbar ist. Zwischen dem Relaisventil 24 und dem Druckluftreservoir 20 sind mehrere Ventileinrichtungen angeordnet. Das Relaisventil 24 ist ferner über eine weitere Leitung 26 mit dem Druckluftreservoir 20 verbunden. Das Relaisventil 24 ist dazu ausgebildet, basierend auf einem über die Vorsteuerdruckleitung 22 bereitgestellten Vorsteuerdruck Cv1 einen Bremsdruck C bereitzustellen. Dabei kann das Relaisventil 24 den Vorsteuerdruck Cv1 direkt in einen Bremsdruck C umsetzen oder den Vorsteuerdruck Cv1 verstärken. Das Relaisventil 24 ist ferner über eine Bremsdruckleitung 28 mit einer Bremseinrichtung 30 verbunden. Über die Bremsdruckleitung 28 kann der Bremsdruck C der Bremseinrichtung 30 zugeführt werden, welche den Bremsdruck C in eine Bremswirkung umzusetzen vermag. In der Bremsdruckleitung 28 ist ein Ablassventil 32 einer Gleitschutzeinrichtung 34 vorgesehen. Die Gleitschutzeinrichtung 34 weist ferner eine Steuereinrichtung 36 auf, die es vermag, das Ablassventil 32 basierend auf von einer Schlupferfassungseinrichtung 38 bereitgestellten Daten anzusteuern. Die Schlupferfassungseinrichtung 38 ist mit einem oder mehreren Raddrehzahlsensoren 40 verbunden, und ist dazu ausgebildet, basierend auf Signalen der Raddrehzahleinrichtung 40 einen Gleit- oder Schlupfzustand eines oder mehrerer Räder festzustellen. Wird ein Gleit- oder Schlupfzustand festgestellt, steuert die Steuereinrichtung 36 das Ablassventil 32 dazu an, den auf die Bremseinrichtung 30 einwirkenden Bremsdruck zu verringern, etwa durch periodisch angesteuertes Entlüften der Bremsdruckleitung 28 über das Ablassventil 32. Es ist ferner eine Anpassungssteuereinrichtung 42 vorgesehen. Die Anpassungssteuerreinrichtung 42 ist dazu ausgebildet, bei einer Ansteuerung einer Bremsung über die Ansteuerungseinrichtung 14 eine gegebenenfalls benötigte Anpassung des Bremsdrucks beziehungsweise des Vorsteuerdrucks zu bestimmen. Dazu ist die Anpassungssteuereinrichtung 42 mit der Ansteuerungseinrichtung 14 verbunden und vermag Signale zu empfangen, die eine Betätigung der Ansteuerungseinrichtung 14 zur Auslösung einer Hochverfügbarkeitsbremsfunktion oder eine Sicherheitsbremsung betreffen. Mit einer Sicherheitsbremsung sind eine vorgegebene Soll-Verzögerung und eine entsprechender Soll-Bremsdruck oder Soll-Vorsteuerdruck verbunden. Ferner ist die Steuereinrichtung 42 dazu ausgebildet, von weiteren Sensoren des Schienenfahrzeugs oder weiteren Steuereinrichtungen des Schienenfahrzeugs Daten zu empfangen, aus denen eine tatsächliche Bremswirkung, insbesondere die tatsächlich erfolgende und erfolgte Verzögerung des Schienenfahrzeugs hervorgeht, also die Ist-Verzögerung. Insbesondere vermag es die Anpassungssteuereinrichtung 42 zu ermitteln, ob eine Ist-Verzögerung einer Soll-Verzögerung entspricht. Stellt die Anpassungssteuereinrichtung 42 fest, dass die Ist-Verzögerung geringer ist als die Soll-Verzögerung, so überträgt sie über die Anpassungssteuerleitung 18 ein Anpassungssignal. Basierend auf dem Anpassungssignal kann eine Modifizierung des Vorsteuerdrucks erfolgen. In der Vorsteuerdruckleitung 22 ist eine Auslöseventileinrichtung 44 vorgesehen. Die Auslöseventileinrichtung 44 ist dazu ausgebildet, basierend auf einem Signal von der Steuerleitung 16 eine Hochverfügbarkeitsbremsfunktion der Bremsanlage 10 einzuleiten. Im Normalzustand, also wenn die Hochverfügbarkeitsbremsfunktion nicht ausgelöst ist, entlüftet die Auslöseventileinrichtung 44 die Steuerleitung 22 und sperrt insbesondere die Verbindung zum Druckluftreservoir 20 ab. Liegt ein Auslösesignal auf der Steuerleitung 16 an, stellt die Auslöseventileinrichtung 44 eine Verbindung zwischen ihrem Ausgang und dem Druckluftreservoir 20 her und sperrt die Entlüftung ab. Mit dem Ausgang der Auslöseventileinrichtung 44 kann innerhalb der Steuerleitung 22 ein Druckbegrenzungsventil 46 verbunden sein, welches den durch den strömenden Druck auf ein vorgegebenes Maß zu reduzieren vermag. Somit kann sichergestellt werden, dass lediglich ein über das Druckbegrenzungsventil 46 festgelegter maximaler Vorsteuerdruck Cv1max in der Leitung 22 herrscht. Das Druckbegrenzungsventil 46 ist allerdings optional. Zwischen dem Ausgang des Druckbegrenzungsventils 46 und einem Vorsteuerdruckeingang des Relaisventils 24 ist eine Steuerventileinrichtung 47 geschaltet. Die Steuerventileinrichtung 47 umfasst in diesem Beispiel ein Anpassungsventil 48, dem stromabwärts ein Sicherungsventil 50 nachgeschaltet ist. Es ist ferner eine Drucksteuereinrichtung 52 vorgesehen, welche es vermag, dass Anpassungsventil 48 basierend auf Signalen von der Steuerleitung 16 und von der Anpassungssteuerleitung 18 anzusteuern. Insbesondere ist die Drucksteuereinrichtung 52 dazu ausgebildet, über das Anpassungsventil 48 die Steuerleitung 22 zu entlüften, um den über die Ventile 44 und 46 bereitgestellten Vorsteuerdruck zu verringern. Wird über die Anpassungssteuerleitung 18 eine Erhöhung des Vorsteuerdrucks angesteuert, kann das Maß der Entlüftung der Vorsteuerdruckleitung 22 verringert werden. Es ist ferner ein Überwachungsmodul 56 vorgesehen, welches es vermag, das Sicherungsventil 50 anzusteuern. Darüber hinaus ist eine Drucksensoreinrichtung 58 vorgesehen, welche es vermag, den Druck in der Vorsteuerdruckleitung 22 stromabwärts des Anpassungsventils 48 zu erfassen. In diesem Beispiel ist die Sensoreinrichtung 58 zur Datenübertragung mit der Ventilsteuereinrichtung 52 und dem Überwachungsmodul 56 verbunden. Es ist allerdings auch vorstellbar, dass der Steuereinrichtung 52 und dem Modul 56 jeweils separate Drucksensoreinrichtungen zugeordnet sind. Damit lässt sich die sicherheitsrelevante Redundanz des Systems verbessern. Das Sicherungsventil 50 ist über eine Sicherheitsleitung 60 mit einem Punkt der Vorsteuerdruckleitung 22 verbunden, der stromaufwärts des Anpassungsventils 48 liegt und ist somit mit einem Ausgang der Auslöseventileinrichtung 44 verbunden oder verbindbar. Das Überwachungsmodul 56 ist dazu ausgebildet, die Funktionsweise der Steuerventileinrichtung 47 zu überwachen. Liegt ein Fehler vor, fällt etwa die Spannungsversorgung aus, oder etwa die Anpassungssteuerleitung 18, steuert das Überwachungsmodul 56 das Sicherungsventil 50 dazu an, seinen mit dem Anpassungsventil 48 verbundenen Eingang abzusperren und eine Verbindung zwischen der Druckleitung 60 und seinem Ausgang herzustellen. Somit kann der über die Bremsauslöseventileinrichtung 44 bereitgestellte, eventuell durch die Ventileinrichtung 46 begrenzte Druck an das Relaisventil 24 weitergeleitet werden. Die Auslöseventileinrichtung 44 weist einen Eingang, einen Ausgang und einen Entlüftungsausgang auf. Im Normalbetrieb ist der Eingang mit dem Entlüftungsausgang verbunden und der Ausgang abgesperrt. Wird die Auslöseventileinrichtung 44 zur Auslösung einer Hochverfügbarkeitsbremsfunktion angesteuert, wird eine fluidische Verbindung zwischen Eingang und Ausgang hergestellt und die Entlüftung wird abgesperrt. Das Druckbegrenzungsventil 46 weist ebenfalls einen Eingang, einen Ausgang und eine Entlüftung auf. Übersteigt der von der Bremsauslöseventileinrichtung 44 bereitgestellte Druck ein vorgeschriebenes Maß, begrenzt das Druckbegrenzungsventil 46 ihn auf einen gegebenen Wert Cv1max. Die Auslöseventileinrichtung 44 kann ein pneumatisches oder ein elektropneumatisches Ventil umfassen, beispielsweise ein Magnetventil. Es ist vorgesehen, dass die Auslöseventileinrichtung 44 dazu ausgebildet ist, in einem unbestromten Zustand oder in einem Zustand, in welchem über eine pneumatische Steuerleitung 16 kein Steuerdruck zugeführt wird, den Eingang und den Ausgang miteinander zu verbinden und die Entlüftung abzusperren, so dass eine Hochverfügbarkeitsbremsung eingeleitet wird, wenn die Spannungsversorgung ausfällt, oder eine Beschädigung der Steuerleitung 16 auftritt. Das Anpassungsventil 48 kann als ansteuerbares Ventil ausgebildet sein, etwa als vorsteuerbares Ventil oder als Magnetventil. Es kann einen Eingang, einen Ausgang und einen Entlüftungsausgang aufweisen. Der Eingang ist über die Steuerleitung 22 mit dem Ausgang des Druckbegrenzungsventils 46 verbunden. Der Ausgang des Anpassungsventils 48 ist mit einem Eingang des Sicherungsventils 50 verbunden. Das Sicherungsventil 50 kann einen Eingang, einen Ausgang und einen Sicherungseingang aufweisen. Über den Sicherungsausgang ist das Sicherungsventil 50 mit der Druckluftleitung 60 verbunden oder verbindbar. Der Ausgang des Sicherungsventils 50 ist mit einem Eingang des Relaisventils 24 verbunden. In einer ersten Schaltstellung der Steuerventileinrichtung 47 ist das Sicherungsventil 50 in die Sicherungsstellung geschaltet, das Anpassungsventil 48 kann in die Entlüftungsstellung geschaltet sein. Somit wird die Steuerventileinrichtung 47, insbesondere das Anpassungsventil 48, umgangen und es ist sichergestellt, dass der maximale Vorsteuerdruck an das Relaisventil 24 angelegt wird. In der zweiten Schaltstellung der Steuerventileinrichtung 47 befinden sich das Sicherungsventil 50 und das Anpassungsventil 48 in der Durchlassstellung, so dass der Vorsteuerdruck angepasst werden kann.

Mit anderen Worten kann der vorliegend vorgestellte Ansatz gemäß dem beschriebenen Ausführungsbeispiel wie folgt zusammengefasst oder erläutert werden.

Bei einem Bremssystem mit Reibungsbremsen gibt es den Zustand der sicheren Bremse. Innerhalb dieses Zustands soll das Bremssystem kennliniengesteuert eine mittlere momentane Fahrzeugverzögerung erreichen. Aufgrund von Parameterschwankungen innerhalb des Bremssystems, kommt es zu Schwankungen der momentanen Fahrzeugverzögerung. Wesentliche bekannte Parameter hierbei sind beispielsweise ein Reibwert des Bremsbelages, ein Wirkungsgrad der Bremskrafterzeuger und/oder ein Raddurchmesser.

Diese Schwankungen der Fahrzeugverzögerung führen zu einer Schwankung der Bremswege. Insbesondere die vom Arbeitspunkt abhängigen Schwankungen des Belagreibwertes wie beispielsweise eine zu verzögernde Masse und/oder eine Bremsausgangsgeschwindigkeit führen dann teilweise bei der Zulassung von Fahrzeugen zu einer Suche nach einem Kompromiss für den angenommenen mittleren Belagreibwert über alle Szenarien. Auf dieser Basis erfolgt dann eine Modifikation der Bremsberechnung und damit eine Anpassung der Kennlinien für die sichere Bremse. Hier können möglicherweise auch mehrere Iterationsläufe notwendig sein.

Darüber hinaus können lokale, beispielsweise geschwindigkeitsabhängige Überhöhungen des Belagreibwertes, wenn dadurch die zulässige Kraftschlussausnutzung Rad Schiene überschritten wird, zu einer Verlängerung des Bremsweges führen, da in der Folge das ganze Verzögerungsniveau der Bremse heruntergezogen werden sollte. Am Ende erfolgt eine Zulassung/Bewertung des Fahrzeugs für einen oder zwei Bremsbeläge unter Lösung der oben genannten Probleme.

Dabei ist in herkömmlichen Systemen eine sichere Bremse kennliniengesteuert, wobei eine mittlere momentane Verzögerung auf Basis der oben genannten Einflussgrößen schwankt.

Mit dem hier vorgestellten Ansatz lässt sich allgemein die Zuspannkraft der sicheren Bremse innerhalb eines eingeschränkten Bereiches modifizieren, damit das Bremssystem an die Parameterschwankungen des Bremssystems angepasst werden kann. Die Anpassung erfolgt insbesondere durch ein zugehöriges zugweites Modifikationssignal und wird auf Wagenebene durch einen zugehörigen Watchdog wie die Steuerventileinrichtung 47 überwacht. Der Fail-Safe-Zustand ist dann erreicht, wenn die maximal notwendige Zuspannkraft und damit der maximale Bremsdruck erreicht sind.

Besonders vorteilhaft ist der hier vorgestellten Ansatz dadurch, dass die Zulassung der Fahrzeuge vereinfacht wird. Weiterhin können innerhalb des möglichen Anpassbereichs verschiedene Beläge, zumindest zugweit, verwendet werden. Auch kann das Einleiten des Zustande der sicheren Bremse wie bislang erfolgen. Die Anpassung des Bremssystems erfolgt beispielsweise durch eine zusätzliche zugweite Leitung (als Modifikation der sicheren Bremse) sowie eine zugehörige Überwachungseinrichtung.

In einem besonders vorteilhaften Ausführungsbeispiel der vorliegenden Erfindung kann ein Einleiten der sicheren Bremse(ung) über das Signal SafeBrake 16 aus Fig. 1 erfolgen, wobei damit ein Signalwert auf dieser Leitung von Cvl max erzeugt wird. Dies entspricht dem Stand der Technik. Weiterhin kann ein zugweites Korrektursignal AdaptValue (Signal 18 aus der Fig. 1) aus A_set (Bremsberechnung) und A_Car ermittelt werden. Eine Umsetzung, auf Wagenebene, des momentan benötigten Bremsdruckes Cvl adapt auf Basis von den Signal AdaptValue 18 durch CvCtrl (Einheit 52 aus Fig. 1). Hierbei werden Signale von im Stand der Technik vorhandenen Komponenten in einer geänderten Verknüpfung verarbeitet.

Auch erfolgt eine wagenlokale (d. h. auf einen Wagen des Schienenfahrzeugs beschränkte) Überwachung von Cv1adapt als Signal zwischen den Einheiten 48 und 50 aus der Fig. 1 durch das Überwachungsmodul dPmax (Einheit 56 aus Fig. 1) . Das Überwachungsmodul 56 (dPmax) erhält auch die Informationen zum Zustand der Signale SafeBrake 16 und AdaptValue 18 und überwacht Cv1adapt auf korrekte Umsetzung. Das Modul dPmax (56) kann das System in den FailSafe-Zustand Cv1= Cv1 max versetzen.

Die Umsetzung des Signals Cv1 auf das Signal C1 über das Relaisventil 24 sowie die Anpassung von Signal C1 an den Kraftschluss zwischen Rad und Schiene auf das Signal Cwsp 28 durch die Gleitschutzeinheit 38 (WSP) ist hier der Vollständigkeit dargestellt.

### Bezugszeichenliste

- 10: Bremsanlage
- 12: Wagen
- 14: Ansteuerungseinrichtung
- 16: Steuerleitung
- 18: Anpassungssteuerleitung
- 20: Druckluftreservoir
- 22: Vorsteuerdruckleitung
- 24: Relaisventil
- 26: Druckluftleitung
- 28: Bremsdruckleitung
- 30: Bremseinrichtung
- 32: Ablassventil
- 34: Gleitschutzeinrichtung
- 36: Steuereinrichtung
- 38: Schlupferkennungseinrichtung
- 40: Raddrehzahlsensoreinrichtung
- 42: Anpassungssteuereinrichtung
- 44: Auslöseventileinrichtung
- 46: Druckbegrenzungsventil
- 47: Steuerventileinrichtung
- 48: Anpassungsventil
- 50: Sicherungsventil
- 52: Drucksteuereinrichtung
- 56: Überwachungsmodul
- 58: Drucksensoreinrichtung
- 60: Umgehungsleitung

## Patentansprüche

1. Steuerventileinrichtung (47) für eine hochverfügbare pneumatische Bremsanlage (10) für ein Schienenfahrzeug, mit
- einem Drucklufteingang, welcher mit einem Ausgang einer Auslöseventileinrichtung (44) verbunden oder verbindbar ist, über den der Steuerventileinrichtung (47) ein definierter Eingangsdruck (Cv1max) zuführbar ist;
- einem Druckluftausgang, welcher mit einer Relaisventileinrichtung (24) verbunden oder verbindbar ist, und über den der Relaisventileinrichtung (24) ein Ausgangsdruck (Cv1) zuführbar ist; und
- einem Sicherheitseingang, welcher mit einer Druckluftquelle (44, 20) verbunden oder verbindbar ist; **dadurch gekennzeichnet, dass**
die Steuerventileinrichtung (47) in einer ersten Schaltstellung den Sicherheitseingang mit dem Druckluftausgang fluidisch verbindet und in einer zweiten Schaltstellung den Drucklufteingang mit dem Druckluftausgang fluidisch verbindet;
wobei die Steuerventileinrichtung (47) dazu ausgebildet ist, in der zweiten Schaltstellung nach Maßgabe einer Steuereinrichtung (52) den Eingangsdruck zu modifizieren, um den Ausgangsdruck bereitzustellen.

2. Steuerventileinrichtung nach Anspruch 1, wobei der Sicherheitseingang über eine Umgehungsleitung (60) fluidisch mit dem Ausgang der Auslöseventileinrichtung (44) verbunden oder verbindbar ist.

3. Steuerventileinrichtung nach Anspruch 1 oder 2, wobei die Steuerventileinrichtung (47) einen Entlüftungsausgang aufweist, über welchen der Eingangsdruck (Cv1max) verringerbar ist, um den Ausgangsdruck (Cv1) zu erhalten.

4. Steuerventileinrichtung nach einem der vorhergehenden Ansprüche, wobei die Steuerventileinrichtung (47) dazu ausgebildet ist, ohne Ansteuerung die erste Schaltstellung einzunehmen.

5. Steuerventileinrichtung nach einem der vorhergehenden Ansprüche, wobei die Auslöseventileinrichtung (44) ein Notbremsventil, ein Schnellbremsventil oder ein Bremssteuerventil einer Betriebsbremse umfasst.

6. Steuerventileinrichtung nach einem der vorhergehenden Ansprüche, wobei die Steuerventileinrichtung (47) dazu ausgebildet ist, den Eingangsdruck basierend auf einem über eine Anpassungssteuerleitung (18) übertragenen Anpassungssignal zu modifizieren und/oder wobei die Steuerventileinrichtung (47) eine Steuereinrichtung (42) aufweist, die dazu ausgebildet, von zumindest einem weiteren Sensor des Schienenfahrzeugs oder zumindest einer weiteren Steuereinrichtung des Schienenfahrzeugs Daten zu empfangen, aus denen eine tatsächliche Bremswirkung, insbesondere die tatsächlich erfolgende und erfolgte Verzögerung des Schienenfahrzeugs hervorgeht, wobei die Steuereinrichtung ausgebildet ist, um das Anpassungssignal auf der Basis der von dem zumindest einem weiteren Sensor des Schienenfahrzeugs oder zumindest einer weiteren Steuereinrichtung des Schienenfahrzeugs empfangenen Daten zu ermitteln.

7. Steuerventileinrichtung nach einem der vorhergehenden Ansprüche, wobei die Steuerventileinrichtung (47) eine Druckbegrenzungsfunktion aufweist, vorzugsweise eine steuerbare Druckbegrenzungsfunktion.

8. Steuerventileinrichtung nach einem der vorhergehenden Ansprüche, wobei die Steuerventileinrichtung (47) ein Überwachungsmodul (56) aufweist, welches es vermag, die Steuerventileinrichtung (47) zwischen der ersten und der zweiten Schaltstellung zu schalten.

9. Pneumatische Bremsanlage (10) für ein Schienenfahrzeug, die eine Hochverfügbarkeitsfunktionalität aufweist, und eine Steuerventileinrichtung (47) nach einem der Ansprüche 1 bis 8 umfasst.

10. Schienenfahrzeug mit einer Steuerventileinrichtung (47)nach einem der Ansprüche 1 bis 8 und/oder einer pneumatischen Bremsanlage (10) nach Anspruch 9.

## Claims

1. Control valve device (47) for a highly available pneumatic brake system (10) for a rail vehicle, comprising
- a compressed air input, which is or can be connected to an output of a triggering valve device (44), and via which a defined input pressure (Cv1max) can be fed to the control valve device (47);
- a compressed air output, which is or can be connected to a of a relay valve device (24) and via which an output pressure (Cv1) can be fed to the relay valve device (24); and
- a safety input, which is or can be connected to a compressed air supply (44, 20);
**characterised in that** in a first switching position the control valve device (47) fluidically connects the safety input to the compressed air output and in a second switching position it fluidically connects the compressed air input to the compressed air output;
wherein in the second switching position the control valve device (47) is designed to modify the input pressure according to a control device (52) in order to provide the output pressure.

2. Control valve device according to claim 1, wherein the safety input is or can be fluidically connected to the output of the triggering valve device (44) via a bypass line (60).

3. Control valve device according to claim 1 or 2, wherein the control valve device (47) comprises a venting outlet, by means of which the input pressure (Cv1max) can be reduced in order to obtain the output pressure (Cv1).

4. Control valve device according to any of the preceding claims, wherein the control valve device (47) is designed to adopt the first switching position without being controlled.

5. Control valve device according to any of the preceding claims, wherein the triggering valve device (44) comprises an emergency brake valve, a rapid brake valve or a brake control valve of a service brake.

6. Control valve device according to any of the preceding claims, wherein the control valve device (47) is designed to modify the input pressure based on an adjustment signal transmitted via an adjustment control line (18) and/or wherein the control valve device (47) comprises a control device (42), which is designed to receive data from at least one other sensor of the rail vehicle or at least one other control device of the rail vehicle, from which data an actual braking effect, especially the actually occurring and completed deceleration of the rail vehicle, arises, wherein the control device is designed to determine the adjustment signal on the basis of the data received from the at least one other sensor of the rail vehicle or at least one other control device of the rail vehicle.

7. Control valve device according to any of the preceding claims, wherein the control valve device (47) comprises a pressure limiting function, preferably a controllable pressure limiting function.

8. Control valve device according to any of the preceding claims, wherein the control valve device (47) comprises a monitoring module (56), which is capable of switching the control valve device (47) between the first and the second switching positions.

9. Pneumatic brake system (10) for a rail vehicle that has high availability functionality, and a control valve device (47) according to any one of claims 1 to 8.

10. Rail vehicle with a control valve device (47) according to any of claims 1 to 8 and/or a pneumatic brake system (10) according to claim 9.

## Revendications

1. Dispositif (47) à soupape de commande pour un système (10) de freinage pneumatique très disponible d'un véhicule ferroviaire comprenant :
- une entrée d'air comprimé qui communique avec une sortie d'un dispositif (44) de soupape de déclenchement ou qui peut le faire et par laquelle une pression (Cv1max) d'entrée définie peut être appliquée au dispositif (47) à soupape de commande ;
- une sortie d'air comprimé qui communique avec un dispositif (24) à soupape relais ou qui peut le faire, et par laquelle une pression (Cv1) de sortie peut être appliquée au dispositif (24) à soupape relais ; et
- une entrée de sécurité qui communique avec une source (44, 20) d'air comprimé ou qui peut le faire ;
**caractérisé en ce que**
le dispositif (47) à soupape de commande relie fluidiquement, dans un premier état de commutation, l'entrée de sécurité à la sortie d'air comprimé et, dans un deuxième état de commutation, relie l'entrée d'air comprimé à la sortie d'air comprimé ;
dans lequel le dispositif (47) à soupape de commande est constitué pour, dans le deuxième état de commutation, modifier la pression d'entrée selon un dispositif (52) de commande pour mettre à disposition la pression de sortie.

2. Dispositif à soupape de commande suivant la revendication 1, dans lequel l'entrée de sécurité communique par un conduit (60) de dérivation fluidiquement avec la sortie du dispositif (44) à soupape de desserrage ou peut le faire.

3. Dispositif à soupape de commande suivant la revendication 1 ou 2, dans lequel le dispositif (47) à soupape de commande a une sortie de purge par laquelle la pression (Cv1max) d'entrée peut être diminuée pour obtenir la pression (Cv1) de sortie.

4. Dispositif à soupape de commande suivant l'une des revendications précédentes, dans lequel le dispositif (47) à soupape de commande est constitué pour, sans excitation, prendre la première position de commutation.

5. Dispositif à soupape de commande suivant l'une des revendications précédentes, dans lequel le dispositif (44) à soupape de desserrage comprend une soupape de frein d'urgence, une soupape de frein rapide ou une soupape de commande d'un frein de service.

6. Dispositif à soupape de commande suivant l'une des revendications précédentes, dans lequel le dispositif (47) à soupape de commande est constitué pour modifier la pression d'entrée sur la base d'un signal d'adaptation transmis par une ligne (18) de commande d'adaptation, et/ou dans lequel le dispositif (47) à soupape de commande a un dispositif (42) de commande constitué pour recevoir, d'au moins un autre capteur du véhicule ferroviaire ou d'au moins un autre dispositif de commande du véhicule ferroviaire, des données dont il ressort un effet de freinage réel, notamment la décélération s'effectuant réellement et effectuée du véhicule ferroviaire, le dispositif de commande étant constitué pour déterminer le signal d'adaptation sur la base des données reçues du au moins un autre capteur du véhicule ferroviaire ou d'au moins un autre dispositif de commande du véhicule ferroviaire.

7. Dispositif à soupape de commande suivant l'une des revendications précédentes, dans lequel le dispositif (47) à soupape de commande a une fonction de limitation de la pression, de préférence une fonction de limitation de la pression qui peut être commandée.

8. Dispositif à soupape de commande suivant l'une des revendications précédentes, dans lequel le dispositif (47) à soupape de commande a un module (56) de contrôle qui permet de commuter le dispositif (47) à soupape de commande entre la première et la deuxième position de commutation.

9. Système (10) de freinage pneumatique d'un véhicule ferroviaire qui a une fonctionnalité à grande disponibilité et qui comprend un dispositif (47) à soupape de commande suivant l'une des revendications 1 à 8.

10. Véhicule ferroviaire ayant un dispositif (47) à soupape de commande suivant l'une des revendications 1 à 8 et/ou un système (10) de freinage pneumatique suivant la revendication 9.
